# FASCICULE DE BREVET EUROPEEN

(11) **EP 2 224 176 B1**
(45) Date de publication et mention de la délivrance du brevet: **25.07.2012**
(21) Numéro de dépôt: 10154560.6
(22) Date de dépôt: 24.02.2010
(51) Int. Cl.: F24D 19/10, F24D 17/00

(54) **Installation de chauffe-eau ameliorée**
Verbesserte Warmwasseranlage
Improved boiler installation

(30) Priorité: 25.02.2009 FR 0951185
(43) Date de publication de la demande: 01.09.2010
(73) Titulaire: Electricité de France, 75008 Paris (FR)
(72) Inventeur: Radulescu, Mihai, 77250 Moret-Sur-Loing (FR)
(74) Mandataire: Texier, Christian

(56) Documents cités:
- DE-U1- 8 811 561
- DE-U1- 29 919 359
- FR-A- 2 391 433
- FR-A- 2 402 841
- FR-A- 2 891 352

## Description

L'invention concerne le domaine des chauffe-eau, notamment des chauffe-eau pour la préparation d'eau chaude sanitaire (ECS).

Plus particulièrement, l'invention concerne les chauffe-eau de type CESI (Chauffe-Eau Solaire Individuel), c'est-à-dire comprenant un moyen de chauffage de type héliothermique.

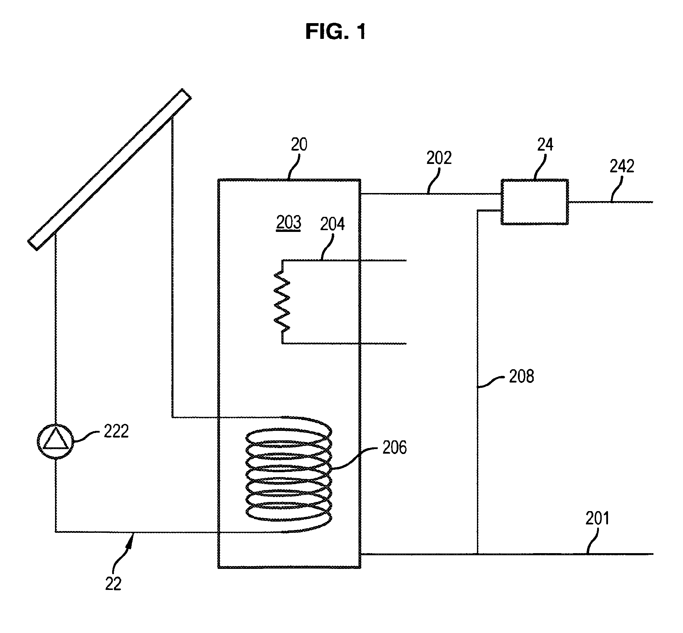

En référence à la figure 1, on connaît des chauffe-eau solaires individuels classiques composés d'un ballon 20, ce ballon comprenant une entrée d'eau froide 201 et une sortie d'eau chaude 202 ; le ballon comprenant également un moyen de chauffage principal sous la forme d'un échangeur 206 relié à un circuit héliothermique 22. Ce circuit héliothermique 22 fait circuler un fluide caloporteur grâce à une pompe 222 dans le circuit, le fluide passant par un capteur héliothermique destiné à chauffer ledit fluide caloporteur. Une fois chauffé, ce fluide caloporteur circule à l'intérieur de l'échangeur 206 afin de provoquer un échange calorifique avec l'eau sanitaire 203 contenue dans le ballon 20. Il est à noter que l'échangeur peut être réalisé sous la forme d'un serpentin interne immergé ou à l'extérieur sous la forme d'un échangeur à plaques. En sortie du ballon 20, un mitigeur thermostatique 24 est situé sur la sortie d'eau chaude 202. Ce mitigeur thermostatique 24 est connecté également à l'entrée d'eau froide sanitaire 201 via un élément de canalisation 208.

Ainsi, la préparation d'eau chaude sanitaire en sortie 242 du mitigeur 24 est faite par ce dernier en mélangeant de l'eau chaude soutirée du ballon et de l'eau froide du réseau en fonction d'une température de consigne. La température de consigne du mitigeur est typiquement de 50°C. Dans le cas où la source de l'énergie solaire serait inefficace (par exemple avec un mauvais ensoleillement du capteur héliothermique) pour permettre d'avoir une sortie d'eau chaude nécessaire à l'élaboration d'une eau chaude sanitaire à la température de consigne, il est prévu d'aménager au sein du ballon 20 un moyen de chauffage d'appoint 204, par exemple sous la forme d'un moyen de chauffage électrique, permettant de réaliser un chauffage supplémentaire de l'eau contenue dans le ballon 20.

En référence à la figure 2, figure tirée du document FR 2 428 794, il est prévu, afin d'améliorer l'utilisation de l'énergie solaire, un deuxième point de soutirage 209 au sein du ballon 20, le point de soutirage 209 étant situé entre l'échangeur 206 et le moyen de chauffage d'appoint 204. Ainsi on assure une utilisation continue de l'énergie solaire et une récupération efficace de l'énergie héliothermique. Afin de pouvoir utiliser ce deuxième point de soutirage 208, un mitigeur 26 est situé sur la sortie d'eau chaude 202 permettant d'effectuer un mélange de l'eau chaude en sortie du ballon et de l'eau tirée au niveau du deuxième point de soutirage 209 en fonction de la température de consigne. Si l'eau tirée au niveau du second point de soutirage 2098 appelée par la suite « eau solaire » est à une température égale ou supérieure à la température de consigne, alors le mitigeur 26 bloquera le flux d'eau chaude à la sortie 202 du ballon 20 et ne fournira que de l'eau en sortie du second point de soutirage 208 à la sortie 260 du mitigeur 26.

Ainsi, un tel agencement permet d'utiliser efficacement et en continu l'eau solaire et d'économiser de l'énergie électrique d'appoint. En effet, l'énergie solaire étant gratuite et renouvelable, il est intéressant de privilégier cette source d'énergie à l'énergie électrique d'appoint.

D'autres documents de l'état de l'art comme le document FR 2 488 422 proposent également une pluralité de points de soutirage répartis sur le ballon dans le sens de la hauteur.

Cependant, des critiques ont été émises quant à l'utilisation d'un tel dispositif notamment dans le risque que ce dispositif présente de développement de légionelles, dans la partie basse du ballon, dans le volume d'eau tiède.

Un but de l'invention est donc de proposer un dispositif de chauffe-eau amélioré par rapport à l'état de l'art, permettant notamment de résoudre le problème cité précédemment.

A cet effet, l'invention concerne un dispositif de chauffe-eau comprenant un ballon, le ballon comprenant une entrée d'eau froide connectée à une arrivée d'eau froide et une sortie d'eau chaude, le ballon comprenant également un moyen de chauffage principal ainsi qu'un moyen de chauffage d'appoint agencé au-dessus du moyen de chauffage principal **caractérisé en ce que** le dispositif comprend en outre un échangeur de chaleur placé entre le moyen de chauffage principal et le moyen de chauffage d'appoint, l'échangeur comprenant une entrée connectée à l'arrivée d'eau froide et une sortie connectée à la sortie d'eau chaude via un mitigeur principal situé sur ladite sortie d'eau chaude.

Ainsi, l'utilisation d'un tel chauffe-eau permet notamment de s'abstenir des risques de soutirer une eau solaire contaminée par légionelles tout en garantissant une récupération efficace et continue de l'eau solaire.

Avantageusement mais facultativement, l'invention comprend au moins l'une des caractéristiques suivantes :
o la sortie de l'échangeur est connectée au mitigeur principal via un mitigeur secondaire connecté en outre à l'arrivée d'eau froide,
o le dispositif comprend en outre un mitigeur de distribution situé sur la sortie du mitigeur principal, le mitigeur étant connecté via un élément de canalisation à l'arrivée d'eau froide,
o le moyen de chauffage principal comprend un échangeur connecté à un circuit héliothermique,
o le moyen de chauffage d'appoint comprend un élément de chauffage électrique ou hydraulique,
o le dispositif comprend en outre des moyens de contrôle destinés à commander le ou les mitigeur(s) du dispositif en fonction d'une température de consigne,
o le ou les mitigeur(s) est (sont) de type thermostatique.

L'invention concerne également un procédé d'utilisation d'un dispositif de chauffe-eau selon l'invention, **caractérisé en ce qu**'il comprend au moins l'une des étapes suivantes :
o actionner le mitigeur principal afin de mélanger l'eau chaude en sortie du ballon et l'eau en sortie de l'échangeur pour atteindre une température de consigne,
o actionner le mitigeur secondaire dans le cas où la température en sortie de l'échangeur est supérieure à la température de consigne,
o actionner le mitigeur de distribution afin de rajouter une proportion d'eau froide suffisante pour atteindre la température de consigne dans le cas où la température en sortie du mitigeur principal est supérieure à la température de consigne.

D'autres caractéristiques, buts et avantages de la présente invention apparaîtront à la lecture de la description détaillée qui va suivre, au regard des dessins annexés, donnés à titre d'exemples non limitatifs et sur lesquels:
- la figure 1 représente schématiquement un chauffe-eau connu de l'état de l'art,

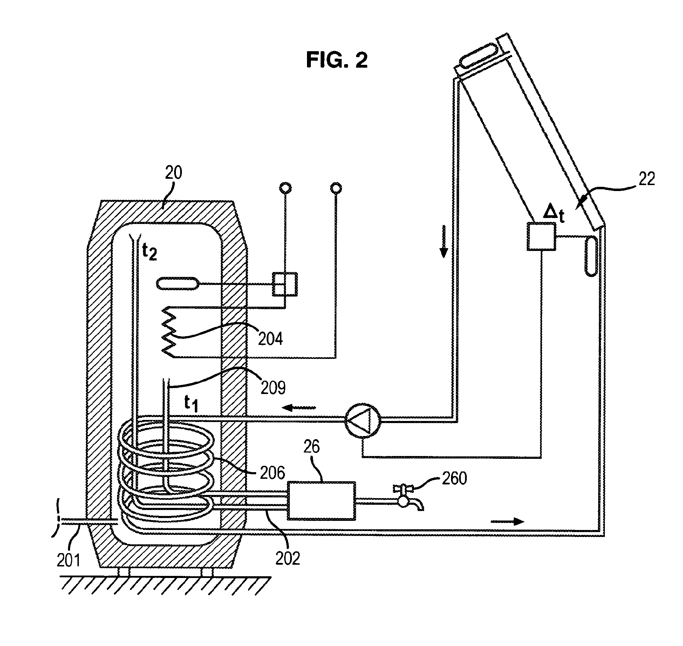

- la figure 2 représente schématiquement un autre chauffe-eau connu de l'état de l'art,
- la figure 3 représente schématiquement un chauffe-eau selon une réalisation possible de l'invention,
- la figure 4 représente schématiquement un chauffe-eau selon une autre réalisation possible de l'invention,
- la figure 5 est une représentation schématisée d'un mitigeur,
- la figure 6 est un schéma bloc représentatif d'un procédé selon l'invention.

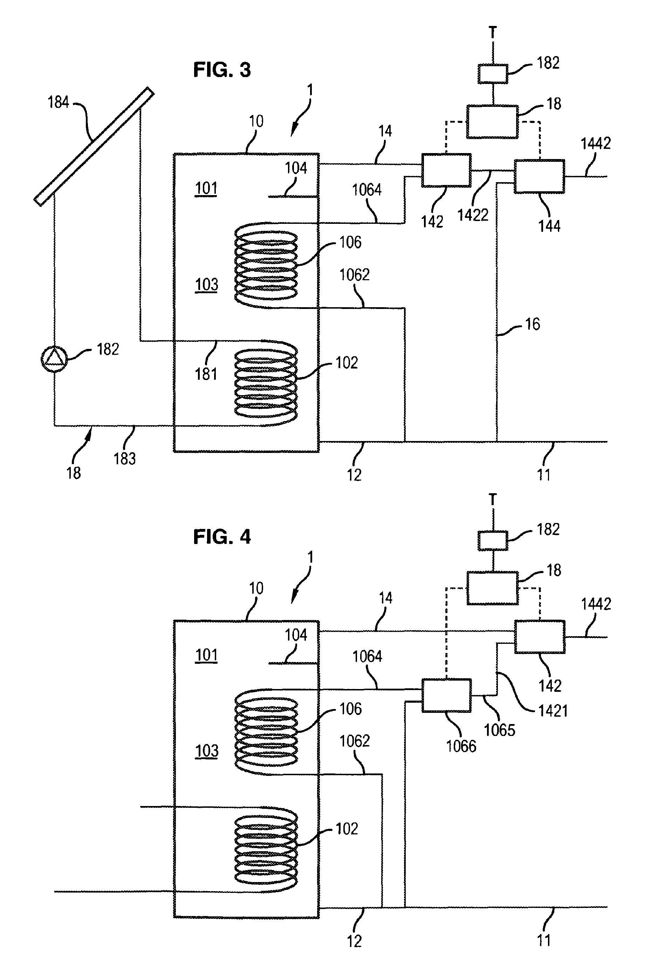

En référence à la figure 3, un dispositif de chauffe-eau selon une réalisation possible de l'invention comprend un ballon 10 destiné au chauffage et au stockage d'eau chaude sanitaire (ECS). Ce ballon comprend une entrée d'eau froide 12 connectée à l'arrivée d'eau froide 11 et une sortie d'eau chaude 14, ce qui lui permet d'être connecté au circuit d'eau sanitaire d'une installation quelconque (résidentielle, industrielle, tertiaire, ...). Le ballon 10 comprend également un moyen de chauffage principal 102 qui est par exemple réalisé sous la forme d'un échangeur connecté à un circuit héliothermique 18. Ce moyen de chauffage peut être également réalisé sous tout autre forme : par exemple sous la forme d'un moyen de chauffage utilisant une source géothermique ou électrique. Le circuit héliothermique 18 comprend un ensemble de canalisations 183 muni d'une pompe 182 permettant de faire circuler au sein de l'ensemble de canalisations un fluide caloporteur 181. Le fluide caloporteur 181 est chauffé à l'aide d'un capteur héliothermique 184 et circule au sein de l'échangeur 102 à travers lequel une énergie thermique est fournie à l'eau sanitaire 101 au sein du ballon 10. L'échangeur 102 est réalisé soit de manière interne sous la forme d'un serpentin, comme cela est représenté à la figure 3, soit de manière externe sous la forme d'un échangeur à plaques. L'échangeur 102 ainsi que le circuit héliothermique 18 sont des éléments bien connus de l'état de l'art et ne seront pas plus détaillés par la suite.
Il est à noter que l'échangeur 102 est situé dans une partie basse du ballon 10 , afin que l'eau, entrant dans le ballon 10 par l'entrée d'eau froide 12 située dans ladite partie basse, soit chauffée via le moyen de chauffage principal 102 et remonte plus haut au sein du ballon par effet thermosiphon, ce qui garantit le chauffage de l'ensemble de l'eau au sein du ballon 10. Afin de garantir le chauffage de l'eau sanitaire 101 au sein du ballon 10 dans le cas où le moyen principal de chauffage serait insuffisant ou venait à défaillir, il est prévu l'agencement d'un moyen de chauffage d'appoint 104, par exemple réalisé sous la forme d'un moyen de chauffage électrique. Alternativement, ce moyen de chauffage d'appoint est réalisé sous la forme d'un élément de chauffage de type hydraulique, c'est-à-dire est un échangeur (par exemple sous la forme d'un serpentin) qui transmet de l'énergie thermique via un fluide caloporteur qui circule entre une source de chaleur (à gaz, fioul, bois, etc.) et le ballon 10.

Ce moyen de chauffage d'appoint 104 est situé à une hauteur plus haute que le moyen de chauffage principal 102. L'utilisation du moyen de chauffage d'appoint permet d'apporter de l'énergie thermique supplémentaire à l'eau 101 du ballon 10 lorsque la source de chauffage principale n'est pas suffisante (manque d'ensoleillement dans le cas d'un capteur héliothermique par exemple). La sortie d'eau chaude 14 du ballon est, agencée à une hauteur plus haute du ballon que la hauteur d'agencement du moyen de chauffage d'appoint 104.

Le dispositif comprend également un échangeur 106 situé entre le moyen thermique principal 102 et le moyen thermique d'appoint 104. L'échangeur 106 est par exemple réalisé sous la forme d'un serpentin agencé à l'intérieur du ballon 10. L'entrée 1062 de l'échangeur 106 est, connectée à l'arrivée d'eau froide 11. La sortie 1064 de l'échangeur 106 est, elle, connectée à un mitigeur principal 142 situé sur la sortie d'eau chaude 14. Ainsi, l'eau de l'arrivée d'eau froide 11 circulant au sein de l'échangeur 106 est chauffée par « l'eau tiède », c'est-à-dire l'eau située entre le moyen de chauffage principal et le moyen de chauffage d'appoint, et donc chauffée essentiellement par le moyen de chauffage principal 102. Via l'échangeur thermique 106, « l'eau tiède » chauffe l'eau circulant dans l'échangeur 106, ce qui permet d'obtenir en sortie de l'échangeur 106 une « eau solaire », c'est-à-dire une eau ayant récupéré l'énergie thermique de « l'eau tiède » sans pour autant risquer de récupérer une eau dans laquelle un développement important de légionelles s'est effectué, par exemple au sein de « l'eau tiède » dont la température peut être de 35°C. Afin de récupérer efficacement l'énergie thermique de « l'eau tiède » un mitigeur principal 142 permet de mélanger l'eau chaude en sortie du ballon et « l'eau solaire » en sortie de l'échangeur 106. Ainsi, le mitigeur principal 142 est actionné en fonction de l'énergie disponible au niveau du moyen thermique principal 102. Ainsi, si le moyen thermique principal 102 est suffisant pour chauffer l'eau à une température de consigne T, alors le mitigeur fournira à sa sortie 1422 essentiellement « l'eau solaire » en sortie de l'échangeur 106. A contrario, si le moyen thermique principal 102 n'est pas suffisant pour fournir une eau à la température de consigne T en sortie de l'échangeur 106, alors le moyen de chauffage d'appoint 104 est actionné et un mélange d' « eau solaire » en sortie 1064 de l'échangeur 106 et en sortie 14 du ballon 10 est réalisé au sein du mitigeur principal 142 permettant d'obtenir une eau à la température de consigne T en sortie 1422 du mitigeur principal 142.

De plus, il est prévu l'agencement d'un mitigeur de distribution 144 connecté pour une part à la sortie 1422 du mitigeur principal 142 et d'autre part à l'arrivée d'eau froide 11 du dispositif via un élément de canalisation supplémentaire 16. Ce mitigeur de distribution 144 permet d'obtenir à sa sortie 1442 une eau à la température de consigne T dans le cas où la température de l'eau en sortie de l'échangeur 106 est supérieure à la température de consigne T. Ainsi, l'adjonction d'une proportion d'eau froide au sein du mitigeur de distribution 144 permet de fournir une eau à la température de consigne T au niveau de la sortie 1442, sortie connectée au circuit sanitaire.

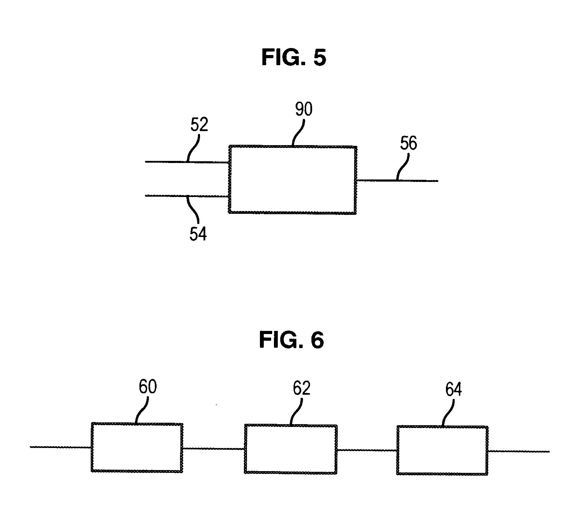

En référence à la figure 5, un mitigeur 90 comprend généralement deux entrées 52 et 54 et une sortie 56, l'eau de la sortie 56 du mitigeur 90 étant produite à l'aide d'un mélange d'une proportion de flux d'eau à l'entrée 52 et de flux d'eau à l'entrée 54, mélange réalisé par le mitigeur 90.

Un tel mitigeur permet notamment de contrôler la température de sortie 56 lorsque l'une des entrées du mitigeur est une source d'eau chaude et l'autre est une source d'eau froide.

De retour à la figure 3, afin de garantir le bon fonctionnement de l'ensemble du dispositif, il est prévu l'agencement de moyens de contrôle 18 destinés à commander les mitigeurs principal 142 et de distribution 144. Ces moyens de contrôle 18, par exemple réalisés sous la forme d'une unité de calcul classique (microcontrôleurs), commandent l'actionnement des mitigeurs à partir de la température de consigne T qu'il est prévu par exemple de fournir auxdits moyens de contrôle 18 via des moyens d'entrée 182. Ces entrées peuvent être du type manuel (par exemple clavier, bouton de commande de la température d'eau, ...) ou automatique, c'est-à-dire provenant de la sortie d'une autre unité de calcul.

Alternativement, les mitigeurs sont de type thermostatique, c'est-à-dire qu'ils règlent de manière autonome le mélange des flux d'eau à leur entrée grâce à un ressort thermosensible réglable.

En référence à la figure 4, et selon une autre réalisation possible de la présente invention, il est prévu d'agencer entre la sortie 1064 de l'échangeur 106 et l'entrée 1421 du mitigeur principal 142 un mitigeur secondaire 1066 connecté également à l'arrivée d'eau froide 11 via un élément de canalisation. Ce mitigeur 1066 est également commandé via les moyens de contrôle 18 ou est de type thermostatique.

Ainsi, lorsque la température de l'eau en sortie de l'échangeur 106 est supérieure à la température de consigne T, le mitigeur 1066 commandé par les moyens de contrôle 18 permet de fournir à sa sortie 1065 une eau à la température de consigne T (grâce à l'adjonction d'eau froide provenant de l'arrivée d'eau froide 11) et le mitigeur 142 fournit au niveau de sa sortie 1422 en totalité le flux provenant de la sortie 1065 du mitigeur secondaire 1066.

En conséquence, l'agencement d'un tel mitigeur secondaire 1066 permet de fournir à sa sortie 1065 (c'est-à-dire à destination du mitigeur principal 142) une eau à la température de consigne lorsque la température de l'eau en sortie de l'échangeur 106 est supérieure à la température de consigne T par l'adjonction d'une proportion d'eau froide provenant de l'arrivée d'eau froide 11.

A contrario, si « l'eau solaire » en sortie de l'échangeur 106 est inférieure à la température de consigne T, le mitigeur 1066 commandé par les moyens de contrôle 18 arrête l'apport d'eau froide via la canalisation 1067, et le mitigeur principal 142 fournit au niveau de la sortie 1422 de l'eau chaude sanitaire à la température de consigne T en mélangeant de l'eau solaire en sortie 1064 de l'échangeur 106 et de l'eau chaude en sortie 14 du ballon 10.
Il est bien évident que lorsque le moyen de chauffage principal permet de fournir en sortie d'échangeur 106 une eau solaire à la température supérieure ou égale à la température de consigne T, le moyen de chauffage secondaire 104 n'est alors pas actionné.

En référence à la figure 6, l'invention concerne également un procédé d'utilisation d'un dispositif de chauffe-eau selon l'invention, **caractérisé en ce qu**'il comprend l'étape suivante : actionner le mitigeur principal 142 afin de mélanger l'eau chaude en sortie du ballon et l'eau solaire en sortie de l'échangeur 106 pour atteindre une température de consigne T (étape 60). Lorsque le dispositif comprend en outre un mitigeur secondaire 1066 (comme représenté à la figure 4), le procédé comprend en outre l'étape suivante : actionner le mitigeur secondaire 1066 dans le cas où la température en sortie de l'échangeur est supérieure à la température de consigne T (étape 62). Si le dispositif comprend un mitigeur de distribution 144 situé à la sortie d'eau chaude (comme représenté sur la figure 3), le procédé comprend en outre l'étape suivante : actionner le mitigeur de distribution 144 afin de rajouter une proportion d'eau froide suffisante pour atteindre la température de consigne dans le cas où la température en sortie du mitigeur principal est supérieure à la température de consigne T (étape 64). L'ensemble des étapes décrites ci-dessus peuvent être réalisées par les moyens de contrôle 18 via la commande des différents mitigeurs du dispositif.

## Revendications

1. Dispositif de chauffe-eau comprenant un ballon (10), le ballon comprenant une entrée d'eau froide (12) connectée à une arrivée d'eau froide (11) et une sortie d'eau chaude (14), le ballon comprenant également un moyen de chauffage principal (102) ainsi qu'un moyen de chauffage d'appoint (104) agencé au dessus du moyen de chauffage principal, **caractérisé en ce que** le dispositif comprend en outre un échangeur de chaleur (106) placé entre le moyen de chauffage principal (102) et le moyen de chauffage d'appoint (104), l'échangeur (106) comprenant une entrée (1062) connectée à l'arrivée d'eau froide (11) et une sortie (1064) connectée à la sortie d'eau chaude (14), via un mitigeur principal (142) situé sur la sortie d'eau chaude (14).

2. Dispositif de chauffe-eau selon la revendication 1, dans lequel la sortie (1064) de l'échangeur (106) est connectée au mitigeur principal (142) via un mitigeur secondaire (1066) connecté en outre à l'arrivée d'eau froide (11).

3. Dispositif de chauffe-eau selon la revendication 1 ou 2 lequel comprend en outre un mitigeur de distribution (144) situé sur la sortie du mitigeur principal (142), le mitigeur étant connecté via un élément de canalisation (16) à l'arrivée d'eau froide (11).

4. Dispositif de chauffe-eau selon l'une des revendications 1 à 3, dans lequel le moyen de chauffage principal (102) comprend un échangeur (102) connecté à un circuit héliothermique.

5. Dispositif de chauffe-eau selon l'une des revendications 1 à 4, dans lequel le moyen de chauffage d'appoint (104) comprend un élément de chauffage électrique ou hydraulique.

6. Dispositif selon l'une des revendications précédentes, **caractérisé en ce qu'**il comprend en outre des moyens de contrôle (18) destinés à commander le ou les mitigeur(s) du dispositif en fonction d'une température de consigne (T).

7. Dispositif selon l'une des revendications 1 à 5, **caractérisé en ce que** le ou les mitigeur(s) est (sont) de type thermostatique.

8. Procédé d'utilisation d'un dispositif de chauffe-eau selon l'une des revendications précédente, **caractérisé en ce qu'**il comprend les étapes suivantes :
- actionner le mitigeur principal (142) afin de mélanger l'eau chaude en sortie du ballon et l'eau en sortie de l'échangeur (106) pour atteindre une température de consigne (T).

9. Procédé selon la revendication précédente, dans lequel la sortie (1064) de l'échangeur (106) est connectée au mitigeur principal (142) via un mitigeur secondaire (1066) connecté en outre via un élément de canalisation (1067) à l'arrivée d'eau froide (11), le procédé comprend en outre l'étape suivante :
- actionner le mitigeur secondaire (1066) dans le cas où la température en sortie de l'échangeur (106) est supérieure à la température de consigne.

10. Procédé selon la revendication 8, dans lequel le dispositif comprend en outre un mitigeur de distribution (144) situé sur la sortie du mitigeur principal (142), le mitigeur étant connecté via un élément de canalisation (16) à l'arrivée d'eau froide (11), le procédé comprend en outre l'étape suivante :
- actionner le mitigeur de distribution (144) afin de rajouter une proportion d'eau froide suffisante pour atteindre la température de consigne dans le cas où la température en sortie du mitigeur principal (142) est supérieure à la température de consigne.

## Claims

1. Water heater device comprising a tank (10), the tank comprising a cold water inlet (12) connected to a cold water supply (11) and a hot water outlet (14), the tank further comprising a main means of heating (102) as well as an additional means of heating (104) arranged above the main means of heating, **characterised in that** the device further comprises a heat exchanger (106) placed between the main means of heating (102) and the additional means of heating (104), the exchanger (106) comprising an inlet (1062) connected to the cold water supply (11) and an outlet (1064) connected to the hot water outlet (14), via a main mixing valve (142) located on the hot water outlet (14).

2. Water heater device according to claim 1, wherein the outlet (1064) of the exchanger (106) is connected to the main mixing valve (142) via a secondary mixing valve (1066) connected furthermore to the cold water supply (11).

3. Water heater device according to claim 1 or 2 which further comprises a distribution mixing valve (144) located on the outlet of the main mixing valve (142), the mixing valve being connected via a conduit member (16) to the cold water supply (11).

4. Water heater device according to one of claims 1 to 3, wherein the main means of heating (102) comprises an exchanger (102) connected to a solar thermal circuit.

5. Water heater device according to one of claims 1 to 4, wherein the additional means of heating (104) comprises an electric or hydraulic heating element.

6. Water heater according to one of the preceding claims, **characterised in that** it further comprises means of controlling (18) intended to control the mixing valve or valves of the device according to a temperature setting (T).

7. Water heater according to one of claims 1 to 5, **characterised in that** the mixing valve or valves are of the thermostatic type.

8. Method for using a boiler device according to one of the preceding claims, **characterised in that** it comprises the following steps:
- actuation of the main mixing valve (142) in order to mix the hot water at the outlet of the tank and the water at the outlet of the exchanger (106) in order to reach a temperature setting (T).

9. Method as claimed in the preceding claim, wherein the outlet (1064) of the exchanger (106) is connected to the main mixing valve (142) via a secondary mixing valve (1066) connected furthermore via a conduit member (1067) to the cold water supply (11), the method further comprising the following step:
- actuating the secondary mixing valve (1066) in the case where the temperature at the outlet of the exchanger (106) is greater than the temperature setting.

10. Method according to claim 8, wherein the device further comprises a distribution mixing valve (144) located on the outlet of the main mixing valve (142), the mixing valve being connected via a conduit member (16) to the cold water supply (11), the method further comprises the following step:
- actuating the distribution mixing valve (144) in order to add a sufficient portion of cold water to reach the temperature setting in the case where the temperature at the outlet of the main mixing valve (142) is greater than the temperature setting.

## Patentansprüche

1. Wassererhitzungsvorrichtung, aufweisend einen Boiler (10), wobei der Boiler einen Kaltwassereingang (12), der mit einer Kaltwasserzufuhr (11) verbunden ist, und einen Warmwasserausgang (14) aufweist, wobei der Boiler auch ein Hauptheizmittel (102) und ein Zusatzheizmittel (104) aufweist, das über dem Hauptheizmittel angeordnet ist, **dadurch gekennzeichnet, dass** die Vorrichtung weiterhin einen Wärmeübertrager (106) aufweist, der zwischen dem Hauptheizmittel (102) und dem Zusatzheizmittel (104) platziert ist, wobei der Wärmeübertrager (106) einen Eingang (1062), der mit der Kaltwasserzufuhr (11) verbunden ist, und einen Ausgang (1064), der mit dem Warmwasserausgang (14) über eine an dem Warmwasserausgang (14) angeordnete Hauptmischeinrichtung (142) verbunden ist, aufweist.

2. Wassererhitzungsvorrichtung gemäß Anspruch 1, wobei der Ausgang (1064) des Wärmeübertragers (106) mit der Hauptmischeinrichtung (142) über eine Sekundärmischeinrichtung (1066), die weiterhin mit der Kaltwasserzufuhr (11) verbunden ist, verbunden ist.

3. Wassererhitzungsvorrichtung gemäß Anspruch 1 oder 2, wobei die Vorrichtung weiterhin eine Verteilungsmischeinrichtung (144) aufweist, die an dem Ausgang der Hauptmischeinrichtung (142) angeordnet ist, wobei die Mischeinrichtung über ein Leitungselement (16) mit der Kaltwasserzufuhr (11) verbunden ist.

4. Wassererhitzungsvorrichtung gemäß einem der Ansprüche 1 bis 3, wobei das Hauptheizmittel (102) einen Wärmeübertrager (102) aufweist, der mit einem heliothermischen Kreislauf verbunden ist.

5. Wassererhitzungsvorrichtung gemäß einem der Ansprüche 1 bis 4, wobei das Zusatzheizmittel (104) ein elektrisches oder hydraulisches Heizelement aufweist.

6. Vorrichtung gemäß einem der vorangehenden Ansprüche, **dadurch gekennzeichnet, dass** sie weiterhin Steuermittel (18) aufweist, die vorgesehen sind, die Mischeinrichtung oder die Mischeinrichtungen der Vorrichtung entsprechend einer Solltemperatur (T) zu steuern.

7. Vorrichtung gemäß einem der Ansprüche 1 bis 5, **dadurch gekennzeichnet, dass** die Mischeinrichtung oder die Mischeinrichtungen solche der thermostatischen Bauart sind.

8. Verfahren zur Verwendung einer Wassererhitzungsvorrichtung gemäß einem der vorangehenden Ansprüche, **dadurch gekennzeichnet, dass** das Verfahren die folgenden Schritte aufweist:
- Betätigen der Hauptmischeinrichtung (142) zum Mischen des Warmwassers im Ausgang des Boilers und des Wassers im Ausgang des Wärmeübertragers (106), um eine Solltemperatur (T) zu erreichen.

9. Verfahren gemäß dem vorangehenden Anspruch, wobei der Ausgang (1064) des Wärmeübertragers (106) mit der Hauptmischeinrichtung (142) über eine Sekundärmischeinrichtung (1066), die weiterhin über ein Leitungselement (1067) mit der Kaltwasserzufuhr (11) verbunden ist, verbunden ist, wobei das Verfahren weiterhin den folgenden Schritt aufweist:
- Betätigen der Sekundärmischeinrichtung (1066) in dem Fall, bei dem die Temperatur am Ausgang des Wärmeübertragers (106) größer als die Solltemperatur ist.

10. Verfahren gemäß Anspruch 8, wobei die Vorrichtung weiterhin eine Verteilungsmischeinrichtung (144) aufweist, die an dem Ausgang der Hauptmischeinrichtung (142) angeordnet ist, wobei die Mischeinrichtung über ein Leitungselement (16) mit der Kaltwasserzufuhr (11) verbunden ist, wobei das Verfahren weiterhin den folgenden Schritt aufweist:
- Betätigen der Verteilungsmischeinrichtung (144) zum ausreichenden Erhöhen eines Verhältnisses des Kaltwassers zum Erreichen der Solltemperatur in dem Fall, bei dem die Temperatur am Ausgang der Hauptmischeinrichtung (142) größer als die Solltemperatur ist.
